(19) Europäisches Patentamt
European Patent Office
Office européen des brevets

(11) EP 3 741 781 A1

(12) EUROPEAN PATENT APPLICATION

(43) Date of publication:
**25.11.2020 Bulletin 2020/48**

(51) Int Cl.:
***C08F 2/40*** *(2006.01)* ***C08L 33/26*** *(2006.01)*

(21) Application number: **19175602.2**

(22) Date of filing: **21.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
- **ROMEIS, Juergen**
**67056 Ludwigsafen (DE)**
- **JANSSEN, Nicole**
**67056 Ludwigsafen (DE)**
- **KLEINER, Matthias**
**67056 Ludwigsafen (DE)**
- **KREMZOW-GRAW, Doris**
**67056 Ludwigsafen (DE)**
- **ZIMMERMANN, Tobias Joacim**
**67056 Ludwigsafen (DE)**

(74) Representative: **BASF IP Association**
**BASF SE**
**G-FLP-C006**
**67056 Ludwigshafen (DE)**

# (54) A METHOD FOR IDENTIFICATION AND EMERGENCY INHIBITION OF THE POLYMERIZATION OF A SOLUTION COMPRISING ACRYLAMIDE MONOMER

(57) The presently claimed invention is directed to a method for the inhibition of the polymerization of a solution comprising acrylamide monomer comprising at least the steps of:
i) detecting a first initiation point and a second initiation point, and
ii) charging at least one polymerization inhibitor to the solution, when either one of the first initiation point and the second initiation point is met;
wherein the first initiation point is an oxygen content of ≤ 1.0 ppm in the solution and the second initiation point is an increase in the relative viscosity of the solution in the range from + 1.0 % to 80 %.

EP 3 741 781 A1

## Description

Field of the invention

The presently claimed invention is directed to a method for the identification and emergency inhibition of the accidental polymerization of a solution comprising acrylamide monomer.

Background of the invention

Acrylamide is used as a raw material for polyacrylamides which are used for many applications such as water treating agents, aggregating agents, thickening agents, oil recovery agents, friction reducers in hydraulic fracturing, paper power enhancing agents in the papermaking industry and thickening agents for papermaking. The most common method for the preparation of the acrylamide monomer is hydrolysis of the acrylonitrile using a microbial cell having the nitrile hydratase activity. The method of using a microbial cell having the nitrile hydratase activity is remarkably effective for the industrial production of the acrylamide monomer, because the reaction conditions are mild with almost no by-product formation.

The acrylamide monomer can easily be polymerized by light, heat, and when brought into contact with a surface of iron. For this reason, in order to stabilize the acrylamide produced, the production is conducted under the conditions of darkness, low temperature and in a state, in which the contact with an iron surface is avoided. Further, the addition of a stabilizer for suppressing the polymerization of the acrylamide monomer has been used widely.

The most effective inhibitor of the polymerization of the acrylamide monomer in the aqueous solution, during the storage, is a constant supply of oxygen to the solution. It is also known to use cupric ions in the acrylamide aqueous solutions to inhibit the polymerization. This inhibitor is used by adding a water-soluble cupric salt such as cupric sulfate, cupric acetate, cupric chloride etc. to the aqueous solution comprising acrylamide monomer. The cupric ion is a convenient inhibitor for this use because it can be easily added in measured amounts, does not evaporate, and can easily be removed by an ion-exchange process, when the solution is to be used for the polymerization reactions.

Another most widely used stabilizer is p-methoxyphenol (MeHQ). However, the use of p-methoxyphenol as a stabilizer suffers from the drawback that it is only effective in the presence of oxygen. If the oxygen level decreases below a certain level, the p-methoxyphenol does not act as a stabilizer or as a polymerization inhibitor any more.

The polymerization reaction of the acrylamide monomer in the aqueous solution is an exothermic process, causing an increase in the temperature of the solution as the reaction proceeds. This increase in the temperature accelerates the polymerization of the acrylamide monomer, which in turn releases the heat faster. The increase in the temperature of the aqueous solution comprising acrylamide monomer due to unwanted polymerization is rather slow and typically initially masked by the heat exchangers that are used to ensure temperature-controlled storage. Once detected, typically an increase in viscosity of the acrylamide has already been taken place and therefore a homogeneous distribution of a short-stopping agent is rather challenging. Still however, measurement of a temperature increase of the stored acrylamide is typically used as an alarm trigger to detect unwanted polymerization in storage vessels.

There had been incidents that the accidental polymerization of the acrylamide monomer in the aqueous solution during the production, the purification and the storage led to the shutdown of the plants causing a tremendous economic loss. Also, it is difficult to clean up the reactors and the instruments in which the accidental polymerization occurred.

Thus, there is constant research being done in order to identify the initiation point of the polymerization and to avoid accidental polymerization of the acrylamide monomer in aqueous solutions by inhibiting the polymerization.

Summary of the invention

Surprisingly, it was found that the unwanted polymerization of the solution comprising acrylamide monomer can be stopped effectively by identifying the initiation point of the polymerization by monitoring the change in the concentration of the oxygen and/or the change in the viscosity of the solution comprising acrylamide monomer and charging a polymerization inhibitor to the solution.

Thus, the presently claimed invention is directed to a method for the inhibition of the polymerization of a solution comprising acrylamide monomer comprising at least the steps of:

i) detecting a first initiation point and a second initiation point, and
ii) charging at least one polymerization inhibitor to the solution, when either one of the first initiation point and the second initiation point is met;

wherein the first initiation point is an oxygen content of $\leq$ 1.0 ppm in the solution and
the second initiation point is an increase in the relative viscosity of the solution in the range from + 1.0 % to 80%.

Brief description of the figures

Fig. 1 describes the inhibition of the polymerization using air containing oxygen as the polymerization inhibitor.

Fig. 2 describes a drop in the amount of oxygen which is present in the solution comprising acrylamide monomer prior to the increase in the relative viscosity of the solution comprising acrylamide monomer.

Fig. 3 discloses the inhibition of the polymerization using Cu(II) as the polymerization inhibitor at % relative increase in viscosity by 40 %. The initial viscosity measured is considered as 100% viscosity and any increase from that is measured at different time intervals. A 120 % viscosity at time "t" means increase in viscosity at a time "t" by 20 % from the initial viscosity (100%).

Detailed description of the invention

Before the present compositions and formulations of the presently claimed invention are described, it is to be understood that this invention is not limited to particular compositions and formulations described, since such compositions and formulation may, of course, vary. It is also to be understood that the terminology used herein is not intended to be limiting, since the scope of the presently claimed invention will be limited only by the appended claims.

If hereinafter a group is defined to comprise at least a certain number of embodiments, this is meant to also encompass a group which preferably consists of these embodiments only. Furthermore, the terms 'first', 'second', 'third' or 'a', 'b', 'c', etc. and the like in the description and in the claims, are used for distinguishing between similar elements and not necessarily for describing a sequential or chronological order. It is to be understood that the terms so used are interchangeable under appropriate circumstances and that the embodiments of the presently claimed invention described herein are capable of operation in other sequences than described or illustrated herein. In case the terms 'first', 'second', 'third' or '(A)', '(B)' and '(C)' or '(a)', '(b)', '(c)', '(d)', 'i', 'ii' etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

Furthermore, the ranges defined throughout the specification include the end values as well, i.e. a range of 1 to 10 implies that both 1 and 10 are included in the range. For the avoidance of doubt, applicant shall be entitled to any equivalents according to applicable law.

In the following passages, different aspects of the presently claimed invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to 'one embodiment' or 'an embodiment' means that a particular feature, structure or characteristic described in connection with the embodiment is included in at least one embodiment of the presently claimed invention. Thus, appearances of the phrases 'in one embodiment' or 'in an embodiment' in various places throughout this specification are not necessarily all referring to the same embodiment, but may refer to the same embodiment. Further, as used in the following, the terms "preferably", "more preferably", "even more preferably", "most preferably" and "in particular" or similar terms are used in conjunction with optional features, without restricting alternative possibilities. Thus, features introduced by these terms are optional features and are not intended to restrict the scope of the claims in any way.

Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the presently claimed invention, and form different embodiments, as would be understood by those in the art. For example, in the appended claims, any of the claimed embodiments can be used in any combination.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

In a first embodiment, the presently claimed invention is directed to a method for the inhibition of the polymerization of a solution comprising acrylamide monomer comprising at least the steps of:

i) detecting a first initiation point and a second initiation point, and
ii) charging at least one polymerization inhibitor to the solution, when either one of the first initiation point and the second initiation point is met;

wherein the first initiation point is an oxygen content of ≤ 1.0 ppm in the solution and
the second initiation point is an increase in the relative viscosity of the solution in the range from + 1.0 % to 80%.

More preferably, the presently claimed invention is directed to a method for the inhibition of the polymerization of a solution comprising acrylamide monomer comprising at least the steps of:

i) detecting a first initiation point and a second initiation point, and
ii) charging at least one polymerization inhibitor to the solution, when either one of the first initiation point and the second initiation point is met;

wherein the first initiation point is an oxygen content of ≤ 1.0 ppm in the solution and
the second initiation point is an increase in the relative viscosity of the solution in the range from + 10% to 60%.

Most preferably, the presently claimed invention is directed to a method for the inhibition of the polymerization of a solution comprising acrylamide monomer comprising at least the steps of:

i) detecting a first initiation point and a second initiation point, and
ii) charging at least one polymerization inhibitor to the solution, when both the first initiation point and the second initiation point are met;

wherein the first initiation point is an oxygen content of ≤ 0.5 ppm in the solution and
the second initiation point is an increase in the relative viscosity of the solution in the range from + 10% to 50%.

In particular preferably, the presently claimed invention is directed to a method for the inhibition of the polymerization of a solution comprising acrylamide monomer comprising at least the steps of:

i) detecting a first initiation point and a second initiation point, and
ii) charging at least one polymerization inhibitor to the solution, when both the first initiation point and the second initiation point are met;

wherein the first initiation point is an oxygen content of ≤ 0.5 ppm in the solution and
the second initiation point is an increase in the relative viscosity of the solution in the range from + 30% to 50%.

The acrylamide monomer is a compound of the formula (A),

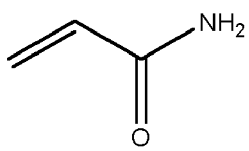

formula (A).

In preferred embodiment, the first initiation point is an oxygen content of ≤ 1.0 ppm in the solution, most preferably ≤ 0.5 ppm, and in particular ≤ 0.1 ppm, as measured by an oxygen probe.

The level of oxygen content in the solution comprising acrylamide monomer is monitored continuously. Alternatively, the level of oxygen content in the solution comprising acrylamide monomer can be monitored at a pre-determined interval. The level of oxygen content in the solution comprising acrylamide monomer is monitored using an oxygen probe. The level of oxygen content in the solution comprising acrylamide monomer is monitored using Hamilton "Oxy Gold B225" equipped with a Knick "Prozeß-O2-Meter 73 $O_2$" digital display. The oxygen probe is immersed in the solution comprising acrylamide monomer while monitoring the oxygen content in the solution. In another embodiment, a continuous or an intermitted flow of air comprising oxygen or oxygen is directed to the solution comprising acrylamide.

In another preferred embodiment, the second initiation point is the increase in the relative viscosity of the solution in the range from + 1 to 80 %, as measured by a viscometer. More preferably, the second initiation point is the increase in the relative viscosity of the solution in the range from + 10 to 70 %, even more preferably the second initiation point is the increase in the relative viscosity of the solution in the range from + 10 to 60 %, most preferably the second initiation point is the increase in the relative viscosity of the solution in the range from + 20 to 50 %, and in particular preferably the second initiation point is the increase in the relative viscosity of the solution in the range from + 30 to 50 %, wherein the increase in viscosity is relative to the initial viscosity of the solution as measured by a viscometer. The

viscosity is defined as a fluid's resistance to flow. The various methods used to measure the viscosity of a fluid are:

Capillary Viscometer: This method is based on using capillary tubes and the time it takes for a volume of liquid to pass through the length of the capillary tube.

Zahn Cup: Zahn Cup is a small container with a handle and a small hole in the bottom. The time it takes to empty the cup through the hole is correlated to viscosity.

Falling Sphere Viscometer: In this method, a sphere of known density is dropped into the fluid sample and the time it takes for the sphere to fall to a specified point is recorded.

Vibrational Viscometer: It measures the damping of an oscillating electromechanical resonator immersed in a fluid.

Rotational Viscometer: It measures the torque required to turn an object in a fluid as a function of that fluid's viscosity.

In a preferred embodiment, the presently claimed invention uses rotational viscometer for the measurement of the viscosity.

The increase of the relative viscosity is used for determining the second initiation point because the increase of the relative viscosity is independent of the concentration of the acrylamide in the solution, the geometry of the flask, the volume of the solution in the flask, the shear rate, the temperature, the immersion depth of the viscometer, the position of the viscometer etc. In other words, when using the increase of the relative viscosity for determining the second initiation point, any one of the above identified methods can be used, because each method leads to an identical increase of the relative viscosity.

In a preferred embodiment, the viscosity of the presently claimed invention is measured using the "spindle L1" by Fungilab and the "Reactavisc" by Hydramotion.

The increase of the relative viscosity is calculated as follows:

$$\%\ \text{Relative viscosity} = \frac{(\text{viscosity at a time "t"} - \text{initial viscosity})\quad \times 100}{\text{initial viscosity}}$$

The viscosity at a time "t" is the viscosity that is measured at any time, while monitoring the viscosity of a solution comprising acrylamide. The initial viscosity is the viscosity that is measured any time prior to time "t".

In another preferred embodiment, in step ii), the at least one polymerization inhibitor is charged to the solution, when either one of the first initiation point and the second initiation point is met, more preferably the at least one polymerization inhibitor is charged to the solution, when the second initiation point is met, and most preferably the at least one polymerization inhibitor is charged to the solution, when the first initiation point and the second initiation point are met.

In another preferred embodiment, the acrylamide is obtained by the hydrolysis of acrylonitrile by a nitrile hydratase. The nitrile hydratase is an enzyme produced by different microorganisms.

In context with the present invention, microorganisms naturally encoding nitrile hydratase, comprise species belonging to a genus selected from the group consisting of *Rhodococcus, Aspergillus, Acidovorax, Agrobacterium, Bacillus, Bradyrhizobium, Burkholderia, Escherichia, Geobacillus, Klebsiella, Mesorhizobium, Moraxella, Pantoea, Pseudomonas, Rhizobium, Rhodopseudomonas, Serratia, Amycolatopsis, Arthrobacter, Brevibacterium, Corynebacterium, Microbacterium, Micrococcus, Nocardia, Pseudonocardia, Trichoderma, Myrothecium, Aureobasidium, Candida, Cryptococcus, Debaryomyces, Geotrichum, Hanseniaspora, Kluyveromyces, Pichia, Rhodotorula, Comomonas, and Pyrococcus.* In preferred embodiments of the invention the microorganism is selected from bacteria of the genus *Rhodococcus, Pseudomonas, Escherichia* and *Geobacillus.*

Preferred microorganisms to be employed in context with any one of the methods of the present invention comprise representatives of the genus *Rhodococcus, e.g., Rhodococcus rhodochrous (e.g., NCIMB 41164, J1/FERM-BP 1478, M33 or M8), Rhodococcus pyridinovorans, Rhodococcus erythropolis, Rhodococcus equi, Rhodococcus ruber, or Rhodococcus opacus.* Further, species suitable as microorganism to be employed in context with any one of the methods of the present invention are, e.g., *Aspergillus niger, Acidovorax avenae, Acidovorax facilis, Agrobacterium tumefaciens, Agrobacterium radiobacter, Bacillus subtilis, Bacillus pallidus, Bacillus smithii, Bacillus sp BR449, Bradyrhizobium oligotrophicum, Bradyrhizobium diazoefficiens, Bradyrhizobium japonicum, Burkholderia cenocepacia, Burkholderia gladioli, Escherichia coli, Geobacillus sp. RAPc8, Klebsiella oxytoca, Klebsiella pneumonia, Klebsiella variicola, Mesorhizobium ciceri, Mesorhizobium opportunistum, Mesorhizobium* sp F28, *Moraxella, Pantoea endophytica,*

*Pantoea agglomerans, Pseudomonas chlororaphis, Pseudomonas putida, Rhizobium, Rhodopseudomonas palustris, Serratia liquefaciens, Serratia marcescens, Amycolatopsis, Arthrobacter, Brevibacterium sp CH1, Brevibacterium sp CH2, Brevibacterium sp R312, Brevibacterium imperiale, Brevibacterium casei, Corynebacterium nitrilophilus, Corynebacterium pseudodiphteriticum, Corynebacterium glutamicum, Corynebacterium hoffmanii, Microbacterium imperiale, Microbacterium smegmatis, Micrococcus luteus, Nocardia globerula, Nocardia rhodochrous, Nocardia sp 163, Pseudonocardia thermophila, Trichoderma, Myrothecium verrucaria, Aureobasidium pullulans, Candida famata, Candida guilliermondii, Candida tropicalis, Cryptococcus flavus, Cryptococcus sp* UFMG- Y28, *Debaryomyces hanseii, Geotrichum candidum, Geotrichum* sp JR1, *Hanseniaspora, Kluyveromyces thermotolerans, Pichia kluyveri, Rhodotorula glutinis, Comomonas testosteroni, Pyrococcus abyssi, Pyrococcus furiosus, or Pyrococcus horikoshii.*

According to one embodiment of any one of the methods of the present invention, the microorganisms belong to the species *Rhodococcus rhodochrous.* Particular examples for strains belonging to *Rhodococcus rhodochrous* which may be employed in context with any one of the methods described herein comprise NCIMB 41164, J1 (FERM-BP 1478), M33 and M8. Alternatively, or in addition to *Rhodococcus rhodochrous,* the microorganism employed in any one of the methods described herein may be *Rhodococcus pyridinovorans.*

In context with the present invention, nitrile hydratase encoding microorganisms which are not naturally encoding nitrile hydratase may be genetically engineered microorganisms which naturally do not contain a gene encoding a nitrile hydratase but which have been manipulated such as to contain a polynucleotide encoding a nitrile hydratase (e.g., via transformation, transduction, transfection, conjugation, or other methods suitable to transfer or insert a polynucleotide into a cell as known in the art; cf. Sambrook and Russell 2001, Molecular Cloning: A Laboratory Manual, CSH Press, Cold Spring Harbor, NY, USA), thus enabling the microorganisms to produce and stably maintain the nitrile hydratase enzyme. For this purpose, it may further be required to insert additional polynucleotides which may be necessary to allow transcription and translation of the nitrile hydratase gene or mRNA, respectively. Such additional polynucleotides may comprise, *inter alia,* promoter sequences, polyT- or polyU-tails, or replication origins or other plasmid-control sequences. In this context, such genetically engineered microorganisms which naturally do not contain a gene encoding a nitrile hydratase, but which have been manipulated such as to contain a polynucleotide encoding a nitrile hydratase may be prokaryotic or eukaryotic microorganisms. Examples for such prokaryotic microorganisms include, e.g., representatives of the species *Escherichia coli.* Examples for such eukaryotic microorganisms include, e.g., yeast (e.g., *Saccharomyces cerevisiae*).

In the context of the present invention, the term "nitrile hydratase" generally means an enzyme which is capable of catalyzing the conversion (*i.e.* hydration) of acrylonitrile to acrylamide. Such an enzyme may be, e.g., the enzyme registered under IUBMB nomenclature as of September 30, 2014: EC 4.2.1.84; CAS-No. 2391-37-5. However, the term "nitrile hydratase" as used herein also encompasses modified or enhanced enzymes which are, e.g., capable of converting acrylonitrile to acrylamide more quickly, or which can be produced at a higher yield/time-ratio, or which are more stable, as long as they are capable to catalyze conversion (*i.e.* hydration) of acrylonitrile to acrylamide. Methods for determining the ability of a given microorganism or enzyme for catalyzing the conversion of acrylonitrile to acrylamide are known in the art. As an example, in context with the present invention, activity of a given microorganism or enzyme to act as a nitrile hydratase in the sense of the present invention may be determined as follows: First reacting 100 μl of a cell suspension, cell lysate, dissolved enzyme powder or any other preparation containing the supposed nitrile hydratase with 875 μl of an 50 mM potassium phosphate buffer and 25 μl of acrylonitrile at 25 ° C on an Eppendorf tube shaker at 1,000 rpm for 10 minutes. After 10 minutes of reaction time, samples may be drawn and immediately quenched by adding the same volume of 1.4% hydrochloric acid. After mixing of the sample, cells may be removed by centrifugation for 1 minute at 10,000 rpm and the amount of acrylamide formed is determined by analyzing the clear supernatant by HPLC. For affirmation of an enzyme to be a nitrile hydratase in context with the present invention, the concentration of acrylamide shall be between 0.25 and 1.25 mmol/l - if necessary, the sample has to be diluted accordingly and the conversion has to be repeated. The enzyme activity may then be deduced from the concentration of acrylamide by dividing the acrylamide concentration derived from HPLC analysis by the reaction time, which has been 10 minutes and by multiplying this value with the dilution factor between HPLC sample and original sample. Activities >5 U/mg dry cell weight, preferably >25 U/mg dry cell weight, more preferably >50 U/mg dry cell weight, most preferably >100 U/mg dry cell weight indicate the presence of a functionally expressed nitrile hydratase and are considered as nitrile hydratase in context with the present invention.

In another preferred embodiment, the acrylamide monomer is present in a concentration in the range of 30 wt.-% to 60 wt.-%, based on the total weight of the solution. More preferably the acrylamide monomer is present in a concentration in the range of 40 wt.-% to 60 wt.-%, most preferably the acrylamide monomer is present in a concentration in the range of 45 wt.-% to 60 wt.-%, and in particular preferably the acrylamide monomer is present in a concentration in the range of 45 wt.-% to 55 wt.-%, each based on the total weight of the solution.

In another preferred embodiment, the at least one polymerization inhibitor is selected from the group consisting of oxygen, Cu(II) compounds and 4-hydroxy-2,2,6,6-tetramethylpiperidine 1-oxyl. More preferably, the at least one polymerization inhibitor is selected from the group consisting of oxygen and Cu(II) compounds. Even more preferably, the

at least one polymerization inhibitor is selected from Cu(II) compounds.

In another preferred embodiment, the concentration of the oxygen in the solution comprising acrylamide monomer is in the range of 0.1 to 500 ppm, based on the total weight of the solution. More preferably the concentration of the oxygen in the solution comprising acrylamide monomer is in the range of 1 to 100 ppm, most preferably the concentration of the oxygen in the solution comprising acrylamide monomer is in the range of 1 to 50 ppm, and in particular the concentration of the oxygen in the solution comprising acrylamide monomer is in the range of 1 to 25 ppm, based on the total weight of the solution.

In another embodiment, the amount of oxygen fed into the solution comprising acrylamide monomer is not restricted. Typically, the oxygen feeding, however, is adjusted such that the oxygen content in the solution comprising acrylamide monomer is between 0.1 and 500 ppm, preferably between 0.1 to 100 ppm, more preferably between 0.5 to 50 ppm and most preferably between 1 and 25 ppm.

The polymerization inhibition using oxygen is achieved by pumping or feeding an oxygenous gas. The oxygenous gas used can be pure oxygen, or else mixtures of oxygen and one or more gases which are inert under the reaction conditions in any desired mixtures. For example, it is possible to use air or a mixture of air and a gas which is inert under the reaction conditions. The inert gas used may be nitrogen, helium, argon, carbon monoxide, carbon dioxide, steam, lower hydrocarbons or mixtures thereof. The oxygen content of the oxygenous gas is between 0.1 and 100 % by volume, preferably between 1 and 50 % by volume, more preferably between 3 and 21 % by volume and most preferably between 9 and 21 % by volume. In another preferred embodiment, the oxygenous gas is air or a mixture of air with a gas which is inert under the reaction conditions.

In another preferred embodiment, the supply of the oxygenous gas is controlled. A sensor is installed in order to determine the oxygen content in the solution comprising acrylamide monomer, therefrom the amount of oxygen is monitored. If required, the oxygenous gas is introduced to inhibit the polymerization of the solution comprising acrylamide monomer.

In another preferred embodiment, the oxygenous gas is fed via any desired devices which are suitable for the process according to the invention and are known to those skilled in the art.

In another preferred embodiment, the metering of the oxygenous gas is through orifices in ring lines installed at the bottom of the storage tank or the reaction vessel with an exit rate of at least 50 mm/s.

In another preferred embodiment, the devices may be curved or straight, inserted or immersed tubes which may optionally be provided with further orifices, or nozzles or valves, or those devices as described in EP 1 035 102. Preference is given, however, to inserted or immersed tubes optionally provided with further orifices. The devices are preferably mounted such that the orifices are immersed at least partly, preferably completely, into the solution comprising acrylamide monomer, in order to dissolve a maximum amount of oxygen.

In another preferred embodiment, the oxygen measurement is carried out by using Hamilton "Oxy Gold B225" equipped with Knick "Prozeß-O2-Meter 73 $O_2$" digital display.

In another preferred embodiment, the at least one polymerization inhibitor is selected from Cu(II) compounds.

In another preferred embodiment, the Cu(II) compounds are selected from the group consisting of $CU(II)Cl_2$, $Cu(II)Br_2$, $Cu(II)I_2$, $Cu(II)(NO_3)_2$, $Cu(II)(NO_3)_2.5H_2O$, $Cu(II)SO_4$, $Cu(II)SO_4.x\ H_2O$ and Cu(II)O. More preferably, the Cu(II) compounds are selected from the group consisting of $Cu(II)Cl_2$, $Cu(II)Br_2$, $Cu(II)(NO_3)_2$, $Cu(II)(NO_3)_2.5H_2O$, $Cu(II)SO_4$ and $Cu(II)SO_4.x\ H_2O$, even more preferably the Cu(II) compounds are selected from the group consisting of $Cu(II)Cl_2$, $Cu(II)(NO_3)_2$, $Cu(II)(NO_3)_2.5H_2O$, $Cu(II)SO_4$ and $Cu(II)SO_4.x\ H_2O$, most preferably the Cu(II) compounds are selected from the group consisting of $Cu(II)(NO_3)_2$, $Cu(II)(NO_3)_2.5H_2O$, $Cu(II)SO_4$ and $Cu(II)SO_4.x\ H_2O$, in particular preferably the Cu(II) compounds are selected from the group consisting of $Cu(II)(NO_3)_2.5H_2O$ and $Cu(II)SO_4.x\ H_2O$, and in particular the Cu(II) compounds is $Cu(II)(NO_3)_2.5H_2O$.

In another preferred embodiment, the amount of the at least one polymerization inhibitor is in the range of 1 to 5000 ppm, based on the total weight of the solution. More preferably, the amount of the at least one polymerization inhibitor is in the range of 100 to 3500 ppm, even more preferably the amount of the at least one polymerization inhibitor is in the range of 500 to 3000 ppm, most preferably the amount of the at least one polymerization inhibitor is in the range of 1000 to 3000 ppm, and in particular the amount of the at least one polymerization inhibitor is in the range of 1000 to 2500 ppm, based on the total weight of the solution.

In another preferred embodiment, the amount of oxygen is $\geq 1.0$ ppm, based on the total weight of the solution. In another preferred embodiment, the amount of oxygen is in the range of 1 to 5000 ppm, based on the total weight of the solution.

In another preferred embodiment, the amount of the at least one Cu(II) compound is in the range of 500 to 3000 ppm, more preferably the amount of the at least one Cu(II) compound is in the range of 1000 to 3000 ppm, and in particular the amount of the at least one Cu(II) compound is in the range of 1000 to 2500 ppm, based on the total weight of the solution.

In another preferred embodiment, the amount of the $Cu(II)(NO_3)_2.5H_2O$ is in the range of 500 to 3000 ppm, more preferably the amount of the $Cu(II)(NO_3)_2.5H_2O$ is in the range of 1000 to 3000 ppm, and in particular the amount

of the $Cu(II)(NO_3)_2.5H_2O$ is in the range of 1000 to 2500 ppm, based on the total weight of the solution.

In another preferred embodiment, the solution comprising acrylamide monomer is maintained at a temperature in the range of 10 to 180 °C. More preferably the solution comprising acrylamide monomer is maintained at a temperature in the range of 20 to 150 °C, most preferably the solution comprising acrylamide monomer is maintained at a temperature in the range of 20 to 100 °C, even more preferably the solution comprising acrylamide monomer is maintained at a temperature in the range of 20 to 50 °C and in particular the solution comprising acrylamide monomer is maintained at a temperature in the range of 20 to 30 °C.

In another preferred embodiment, the solution comprising acrylamide monomer comprises at least one stabilizer.

In another preferred embodiment, the at least one stabilizer is selected from the group consisting of p-hydroxy phenol, p-methoxyphenol, 4-tert-butylcatechol, tert-butylhydroquinone, 1,4-benzoquinone, 6-tert-butyl-2,4-xylenol, 2,6-di-tert-butyl-p-cresol, 2,6-di-tert-butylphenol, 1,1-diphenyl-2-picrylhydrazyl free radical, hydroquinone, nitroso benzene, 4-nitroso-3-methylphenol, sodium-1- naphthylamine-4-sulfonate and phenothiazine.

More preferably, the at least one stabilizer is selected from the group consisting of p-hydroxy phenol, p-methoxyphenol, 4-tert-butylcatechol, tert-butylhydroquinone, 1,4-benzoquinone, 6-tert-butyl-2,4-xylenol, 2,6-di-tert-butyl-p-cresol and 2,6-di-tert-butylphenol.

Most preferably, the at least one stabilizer is selected from the group consisting of p-hydroxy phenol, p-methoxyphenol, tert-butylhydroquinone, 1,4-benzoquinone and 6-tert-butyl-2,4-xylenol.

Particular preferably, the at least one stabilizer is p-hydroxy phenol, and p-methoxyphenol.

In another preferred embodiment, the at least one stabilizer is p-methoxyphenol saturated with p-hydroxy phenol.

In another preferred embodiment, the at least one stabilizer is present in an amount in the range of 0.1 to 1000 ppm, based on the total weight of the solution. More preferably, the at least one stabilizer is present in an amount in the range of 1 to 500 ppm, most preferably the at least one stabilizer is present in an amount in the range of 5 to 300 ppm, and in particular the at least one stabilizer is present in an amount in the range of 10 to 100 ppm, based on the total weight of the solution.

In another preferred embodiment, the solution comprising acrylamide monomer is stabilized with 10 to 50 ppm of p-methoxyphenol. More preferably, the solution comprising acrylamide monomer is stabilized with 10 to 40 ppm of p-methoxyphenol, most preferably the solution comprising acrylamide monomer is stabilized with 10 to 25 ppm of p-methoxyphenol and particularly preferably, the solution comprising acrylamide monomer is stabilized with 13 to 17 ppm of p-methoxyphenol.

In another preferred embodiment, the solution comprising acrylamide monomer is stabilized with at least 0.5 ppm of oxygen and 10 to 50 ppm of p-methoxyphenol. More preferably, the solution comprising acrylamide monomer is stabilized with at least 0.5 ppm of oxygen and 10 to 40 ppm of p-methoxyphenol, most preferably, the solution comprising acrylamide monomer is stabilized with at least 1.0 ppm of oxygen and 10 to 25 ppm of p-methoxyphenol, and particularly preferably, the solution comprising acrylamide monomer is stabilized with at least 1.0 ppm of oxygen and 13 to 17 ppm of p-methoxyphenol.

In another preferred embodiment, the solution comprising acrylamide monomer has a pH in the range of 5 to 8, more preferably the pH is in the range of 6 to 7.5, most preferably the pH is in the range of 6.5 to 7.5 and in particular the pH in the range of 6.8 to 7.5.

The presently claimed invention is associated with at least one of the following advantages:

- A reliable method for predicting the initiation of the polymerization of the solution comprising acrylamide monomer by measuring the relative viscosity of the solution.
- Identifying the polymerization trigger by measuring the change in concentration of the oxygen in the solution comprising acrylamide monomer.
- The inhibitor can be easily deactivated and the subsequent use of the acrylamide monomer for polymerization is possible.

In the following, there is provided a list of embodiments to further illustrate the present disclosure without intending to limit the disclosure to the specific embodiments listed below.

Embodiments:

1. A method for the inhibition of the polymerization of a solution comprising acrylamide monomer comprising at least the steps of:

i) detecting a first initiation point and a second initiation point, and
ii) charging at least one polymerization inhibitor to the solution, when either one of the first initiation point and the second initiation point is met;

wherein the first initiation point is an oxygen content of ≤ 1.0 ppm in the solution and the second initiation point is an increase in the relative viscosity of the solution in the range from + 1.0 % to 80%.

2. The method according to embodiment 1, wherein the second initiation point is an increase in the relative viscosity of the solution in the range from + 10 to 60 %.

3. The method according to one or more of embodiments 1 to 2, wherein the oxygen content is measured by an oxygen probe.

4. The method according to one or more of embodiments 1 to 3, wherein the viscosity is measured by a viscometer.

5. The method according to one or more of embodiments 1 to 4, wherein in step ii) the at least one polymerization inhibitor is charged to the solution, when the first initiation point and the second initiation point are met.

6. The method according to one or more of embodiments 1 to 5, wherein the acrylamide is obtained by hydrolysis of acrylonitrile by a nitrile hydratase.

7. The method according to one or more of embodiments 1 to 6, wherein the acrylamide is present in a concentration in the range of 30 wt.-% to 60 wt.-%, based on the total weight of the solution.

8. The method according to one or more of embodiments 1 to 7, wherein the at least one polymerization inhibitor is selected from the group consisting of oxygen, Cu(II) compounds and 4-hydroxy-2,2,6,6-tetramethylpiperidine 1-oxyl.

9. The method according to one or more of embodiments 1 to 7, wherein the at least one polymerization inhibitor is a Cu(II) compound.

10. The method according to embodiments 8 or 9, wherein the Cu(II) compounds are selected from the group consisting of $Cu(II)Cl_2$, $Cu(II)Br_2$, $Cu(II)I_2$, $Cu(II)(NO_3)_2$, $Cu(II)(NO_3)_2.5H_2O$, $Cu(II)SO_4$, $Cu(II)SO_4.x\ H_2O$ and Cu(II)O.

11. The method according to one or more of embodiments 8 to 10, wherein the Cu(II) compound is $Cu(II)(NO_3)_2$.

12. The method according to one or more of embodiments 7 to 11, wherein, after charging in step ii), the amount of the Cu(II) compounds and 4-hydroxy-2,2,6,6-tetramethylpiperidine 1-oxyl is each in the range of 1 ppm to 5000 ppm, based on the total weight of the solution.

13. The method according to embodiment 7, wherein, after charging in step ii), the amount of oxygen is in the range of 1 to 500 ppm, based on the total weight of the solution.

14. The method according to one or more of embodiments 1 to 13, wherein the solution is maintained at a temperature in the range of 10 to 180 °C.

15. The method according to one or more of embodiments 1 to 14, wherein the solution comprises at least one stabilizer.

16. The method according to embodiment 15, wherein the at least one stabilizer is selected from the group consisting of p-hydroxy phenol, p-methoxyphenol, 4-tert-butylcatechol, tert-butylhydroquinone, 1,4-benzoquinone, 6-tert-butyl-2,4-xylenol, 2,6-di-tert-butyl-p-cresol, 2,6-di-tert-butylphenol, 1,1-diphenyl-2-picrylhydrazyl free radical, hydroquinone, nitroso benzene, 4-nitroso-3-methylphenol, sodium-1- naphthylamine-4-sulfonate and phenothiazine.

17. The method according to embodiment 16, wherein the at least one stabilizer is p-methoxyphenol.

18. The method according to one or more of embodiments 15 to 17, wherein the at least one stabilizer is present in an amount in the range of 0.1 to 100 ppm, based on the total weight of the solution.

19. The method according to one or more of embodiments 15 to 17, wherein the at least one stabilizer is present in an amount in the range of 5 to 50 ppm, based on the total weight of the solution.

20. The method according to one or more of embodiments 1 to 19, wherein the solution has a pH in the range of 5 to 8.

21. The method according to one or more of embodiments 1 to 19, wherein the solution has a pH in the range of 6 to 7.5.

While the presently claimed invention has been described in terms of its specific embodiments, certain modifications and equivalents will be apparent to those skilled in the art and are intended to be included within the scope of the presently claimed invention

Examples

The presently claimed invention is illustrated in detail by non-restrictive working examples which follow. More particularly, the test methods specified hereinafter are part of the general disclosure of the application and are not restricted to the specific working examples.

Materials:

Bioacrylamide solution (BioACM) is available from BASF and Sigma Aldrich.
$Cu(NO_3)_2.5H_20$ is available from Sigma Aldrich.
4-Hydroxy-2,2,6,6-tetramethylpiperidin-1-oxyl (hydroxy-TEMPO, HOT) is available from Sigma Aldrich.
p-Methoxyphenol (MeHQ) is available from Sigma Aldrich.
*tert*-Butylhydroperoxide (*t*BHP) is available from Sigma Aldrich.
2,2'-Azobis(2-methylpropionamidine) dihydrochloride (V-50 Azo initiator) is commercially available.
2,2'-Azobis[2-(2-imidazolin-2-yl)propane]dihydrochloride (VA-44 Azo initiator) is commercially available.

General methods:

The accelerated polymerization of BioACM was conducted at different conditions such as without any initiator or using a polymerization initiator. The polymerization starts after few hours and the short stopping solution (in water) is introduced within 1 min at different relative viscosities.

Method 1:

The accelerated polymerization of BioACM was conducted by purging nitrogen gas continuously. This led to initiation of the polymerization after few hours. The polymerization could be initiated faster by increasing the temperature.

Method 2:

The accelerated polymerization of BioACM was conducted by adding polymerization initiators such as *t*BHP, V-50 Azo initiator, VA-44 Azo initiator etc. The addition led to initiation of the polymerization after a few hours. The polymerization could be initiated faster by increasing the temperature.
The relative viscosity of the BioACM was measured as per the following procedure:
Table 1 shows the amount of the inhibitor which is sufficient for an effective stopping. The polymerization was initiated without polymerization catalyst.

Table 1:

| Example No. | Temp. | Atmosphere | % increase in Relative viscosity at which inhibitor is injected (rel. %) | Qty of inhibitor | Time of inhibitor injection | result |
|---|---|---|---|---|---|---|
| 1 | 25 °C | $N_2$gas | 40 | 1200ppm HOT | 24h | Polymerization stopped |
| 2 | 29 °C | $N_2$gas | 40 | 1140ppm Cu | 3.02 h | Polymerization stopped |

The examples 1 and 2 were conducted under nitrogen. The continuous purging of the nitrogen gas led to the deactivation of the stabilizer and the polymerization was initiated after few hours. In example 1, HOT was added as the polymerization inhibitor at 40 % increase in relative viscosity and was able to stop the polymerization. Similarly, in

example 2 the Cu(II) compound was able to stop the polymerization by adding the inhibitor at 40% increase in relative viscosity.

Table 2: Stabilization of BioACM using oxygen

| Example No. | | Temp. | % Relative viscosity | Oxygen (%) in oxygenous gas for polymerization inhibition | Time of the change in $O_2$ concentration | Result |
|---|---|---|---|---|---|---|
| 5 | | 29 °C | 24 %, 600rpm | 21 | 4.39 h | Polymerization stopped |
| 6 | | 29 °C | 35 %, 400rpm | 21 | 7.30 h | Polymerization stopped |
| 7 | | 29 °C | 24 %, 600rpm | 21 | 3.55 h | Polymerization stopped |
| 8 | | 29 °C | 19 %, 600 rpm | 9.2 | 6.45 h | Polymerization stopped |

Table 2 discloses that the nitrogen triggered polymerization was stoppable using the air containing oxygen.

Table 3 discloses the reaction run under an iron source ($Fe_2O_3$ or black steel wool) as initiator.

Table 3:

| Example No. | Temp. °C | Polymerizati on initiator | % increase in relative viscosity | Amount of inhibitor (Cu(II) ions) | Time of injection of inhibitor | result |
|---|---|---|---|---|---|---|
| 9 | 29 | 1000 ppm $Fe_2O_3$ | 40 | 1140 ppm | 51 h | Polymerizatio n stopped |
| 10 | 25 | 18 to 40 ppm pieces of black wool steel | 40 | 1140 ppm | 19 h | Polymerizatio n stopped |

The polymerisation was stopped with Cu(II)-nitrate-solution which was added at a relative viscosity $\mu$ = 40 rel.%.

The change in the amount of oxygen in the acrylamide solution was monitored under the following conditions (table 4).

Table 4

| Example No. | Temp. °C | Polymerization initiator | Oxygen content at which inhibitor was added | Amount of inhibitor (Cu(II) ions) | result |
|---|---|---|---|---|---|
| 11 | 25 | 20 ppm black wool steel | 0 ppm, $\mu$ = 20% | 1140 ppm | Polymerization stopped |
| 12 | 25 | 100 ppm black wool steel | 0ppm, $\mu$ = 40% | 1140 ppm | Polymerization stopped |

Another example 13, was conducted with an azo-initiator (VA-044) using Bio-ACM (containing 200 ppm acrylic acid and 18 ppm MeHQ) under air. The fig. 2 discloses the change in the oxygen level and the relative viscosity. Under this condition the reaction was initially started with 600 ppm VA-044 at 25 ° C. Since no polymerization was initiated after 46h, additional 400ppm of VA-044 was added and the temperature increased to 31° C. Further 18h later (without polymerization) 1000ppm of VA-044 were added, which led to an immediate decrease in the $O_2$ concentration. Approximately 5h later, at a viscosity of % $\mu$ = 40 rel.%, 2000 ppm of Cu(II)-nitrate-solution was added, and the polymerization was stopped successfully.

It can be inferred from the above described examples that the level of oxygen decreases to a minimum level prior to initiating the polymerization. This give an indication of the potential risk of occurrence of the accidental polymerization. The polymerization inhibitor was charged to the solution comprising acrylamide monomer, either after detecting

the decrease in the concentration of the oxygen or after detecting the increase in the relative viscosity.

In conclusion, the start of the polymerization of the solution comprising acrylamide monomer was detected by the increase in the relative viscosity. The oxygen content gave an indication of the risk of a polymerization, even before the polymerization starts.

## Claims

1. A method for the inhibition of the polymerization of a solution comprising acrylamide monomer comprising at least the steps of:

   i) detecting a first initiation point and a second initiation point, and
   ii) charging at least one polymerization inhibitor to the solution, when either one of the first initiation point and the second initiation point is met;

   wherein the first initiation point is an oxygen content of ≤ 1.0 ppm in the solution and the second initiation point is an increase in the relative viscosity of the solution in the range from + 1.0 % to 80 %.

2. The method according to claim 1, wherein the second initiation point is an increase in the relative viscosity of the solution in the range from + 10 to 60 %.

3. The method according to one or more of claims 1 to 2, wherein the oxygen content is measured by an oxygen probe.

4. The method according to one or more of claims 1 to 3, wherein the viscosity is measured by a viscometer.

5. The method according to one or more of claims 1 to 4, wherein in step ii) the at least one polymerization inhibitor is charged to the solution, when the first initiation point and the second initiation point are met.

6. The method according to one or more of claims 1 to 5, wherein the acrylamide is obtained by hydrolysis of acrylonitrile by a nitrile hydratase.

7. The method according to one or more of claims 1 to 6, wherein the at least one polymerization inhibitor is selected from the group consisting of oxygen, Cu(II) compounds and 4-hydroxy-2,2,6,6-tetramethylpiperidine 1-oxyl.

8. The method according to claims 7, wherein the Cu(II) compounds are selected from the group consisting of $Cu(II)Cl_2$, $Cu(II)Br_2$, $Cu(II)I_2$ $Cu(II)(NO_3)_2$, $Cu(II)(NO_3)_2.5H_2O$, $Cu(II)SO_4$, $Cu(II)SO_4.x\ H_2O$ and Cu(II)O.

9. The method according to claim 7, wherein the Cu(II) compound is $Cu(II)(NO_3)_2$.

10. The method according to claim 7, wherein, after charging in step ii), the amount of Cu(II) compounds and 4-hydroxy-2,2,6,6-tetramethylpiperidine 1-oxyl is each in the range of 500 to 3000 ppm, based on the total weight of the solution.

11. The method according to claim 7, wherein, after charging in step ii), the amount of oxygen is in the range of 1 to 500 ppm, based on the total weight of the solution.

12. The method according to one or more of claims 1 to 11, wherein the solution is maintained at a temperature in the range of 10 to 180 °C.

13. The method according to one or more of claims 1 to 12, wherein the solution comprises at least one stabilizer.

14. The method according to claim 13, wherein the at least one stabilizer is selected from the group consisting of p-hydroxy phenol, p-methoxyphenol, 4-tert-butylcatechol, tert-butylhydroquinone, 1,4-benzoquinone, 6-tert-butyl-2,4-xylenol, 2,6-di-tert-butyl-p-cresol, 2,6-di-tert-butylphenol, 1,1-diphenyl-2-picrylhydrazyl free radical, hydroquinone, nitroso benzene, 4-nitroso-3-methylphenol, sodium-1- naphthylamine-4-sulfonate and phenothiazine.

15. The method according to one or more of claims 13 or 14, wherein the at least one stabilizer is present in an amount in the range of 1 to 100 ppm, based on the total weight of the solution.

**16.** The method according to one or more of claims 1 to 15, wherein the solution has a pH in the range of 5 to 8.

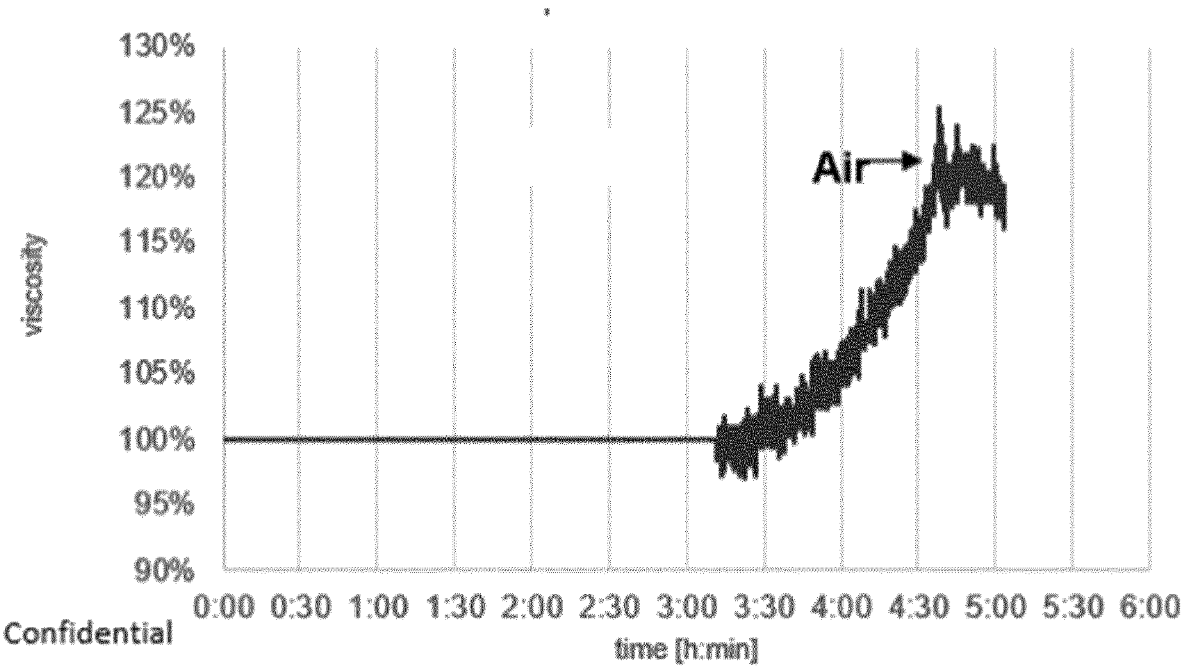
130%
125%
120%
115%
110%
105%
100%
95%
90%
viscosity
Air
0:00 0:30 1:00 1:30 2:00 2:30 3:00 3:30 4:00 4:30 5:00 5:30 6:00
time [h:min]
Confidential

Fig.1

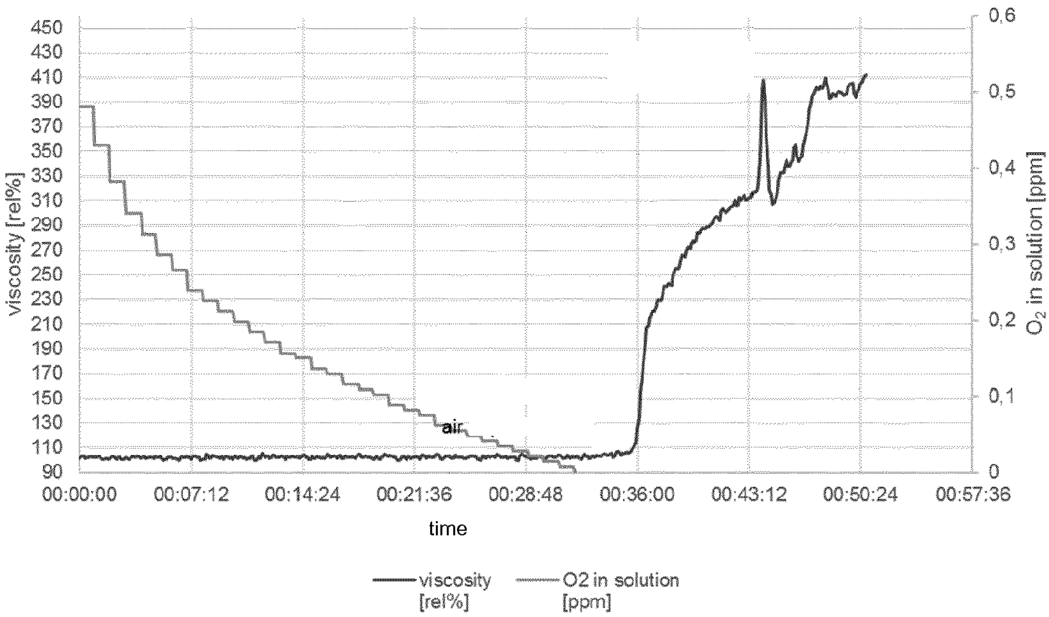
450
430
410
390
370
350
330
310
290
270
250
230
210
190
170
150
130
110
90
viscosity [rel%]
0,6
0,5
0,4
0,3
0,2
0,1
0
$O_2$ in solution [ppm]
air
00:00:00
00:07:12
00:14:24
00:21:36
00:28:48
00:36:00
00:43:12
00:50:24
00:57:36
time
viscosity [rel%]
O2 in solution [ppm]

Fig. 2

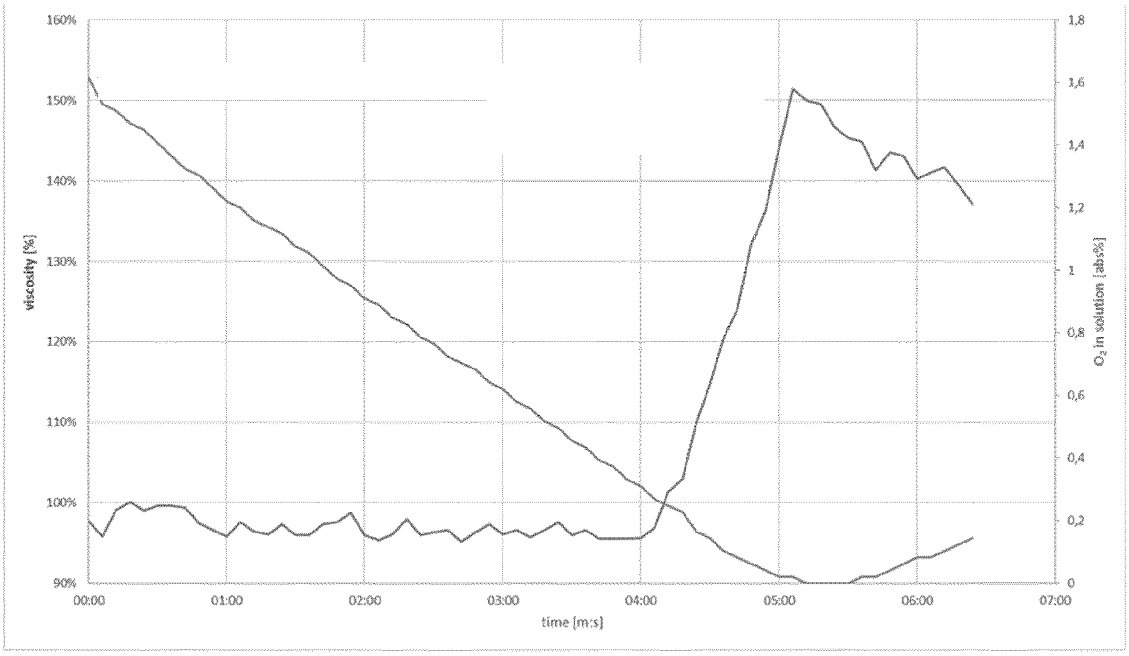

160%
150%
140%
130%
120%
110%
100%
90%
viscosity [%]
1,8
1,6
1,4
1,2
1
0,8
0,6
0,4
0,2
0
O2 in solution [abs%]
00:00
01:00
02:00
03:00
04:00
05:00
06:00
07:00
time [m:s]


Fig. 3

Europäisches Patentamt
European Patent Office
Office européen des brevets

# EUROPEAN SEARCH REPORT

Application Number
EP 19 17 5602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 163 755 A (BUTENSKY MARTIN S [US] ET AL) 7 August 1979 (1979-08-07)<br>* the whole document *<br>----- | 1-16 | INV.<br>C08F2/40<br>C08L33/26 |
| A | US 3 397 232 A (KAZUMI TAKAGI ET AL) 13 August 1968 (1968-08-13)<br>* the whole document *<br>----- | 1-16 | |
| A | US 3 887 425 A (MUNCH ROBERT JAMES) 3 June 1975 (1975-06-03)<br>* the whole document *<br>----- | 1-16 | |

TECHNICAL FIELDS SEARCHED (IPC)

C08F
C09J
C08L

The present search report has been drawn up for all claims

1

| Place of search | Date of completion of the search | Examiner |
|---|---|---|
| Munich | 4 October 2019 | Lux, Rudolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 19 17 5602

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2019

| Patent document cited in search report | Publication date | Patent family member(s) | Publication date |
|---|---|---|---|
| US 4163755 A | 07-08-1979 | NONE | |
| US 3397232 A | 13-08-1968 | BE 678401 A | 01-09-1966 |
| | | CH 471082 A | 15-04-1969 |
| | | DE 1543466 B1 | 15-07-1971 |
| | | GB 1122112 A | 31-07-1968 |
| | | NL 6603953 A | 26-09-1966 |
| | | US 3397232 A | 13-08-1968 |
| US 3887425 A | 03-06-1975 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1035102 A


### Non-patent literature cited in the description


- **SAMBROOK ; RUSSELL.** Molecular Cloning: A Laboratory Manual. CSH Press, 2001
- *CHEMICAL ABSTRACTS,* 2391-37-5